(19)

Europäisches
Patentamt

European
Patent Office

Office européen
des brevets

(11) **EP 2 947 435 A1**

(12) **EUROPEAN PATENT APPLICATION**

(43) Date of publication:
25.11.2015 Bulletin 2015/48

(51) Int Cl.:
*G01J 5/62* (2006.01)    *G01J 3/28* (2006.01)

(21) Application number: 15164674.2

(22) Date of filing: 22.04.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.05.2014 IT RM20140249**

(71) Applicant: **MBDA ITALIA S.p.A.**
**00131 Roma (IT)**

(72) Inventors:
• **Liberati, Riccardo**
 **I-00131 Roma (IT)**
• **Rossi, Massimiliano**
 **I-00131 Roma (IT)**

(74) Representative: **Carangelo, Pierluigi et al**
**Jacobacci & Partners S.p.A.**
**Via delle Quattro Fontane, 15**
**00184 Roma (IT)**

(54) **METHOD FOR ESTIMATING THE SPECTRAL RESPONSE OF AN INFRARED PHOTODETECTOR**

(57)    A method (1) is described for the estimation of the spectral response of an infrared photodetector (32) that starts with response measurements of the infrared photodetector (32) obtained by varying the temperature of the black body (31) and is such as to estimate the spectral response by solving a numerical matrix problem. The method (1) is fully automatable and presents a cost reduction compared to the known methods because it does not require the use of a monochromator or a circular filter.

FIG. 1

EP 2 947 435 A1

**Description**

The present disclosure refers to the technical field of infrared photodetectors and in particular concerns a method for estimating the spectral response of an infrared photodetector.

Photodetectors, and in particular infrared photodetectors, are optoelectronic devices widely employed in civil and military applications. In some applications, even when the infrared photodetectors are arranged in planar arrays, for example in so-called "staring arrays", it is necessary to characterize the spectral response of the array by taking random measurements on several photodetectors comprised in them to optimize the design of the system within which the array is used. The spectral response of a photodetector describes the behaviour of the photodetector as a function of the wavelength of the incident infrared optical radiation.

The prior art has various methods for characterizing or estimating the spectral response of an infrared photodetector.

A known method, which is probably the most widely used, requires the characterization or estimate of the spectral response be performed using a monochromator. This method allows obtaining an estimate that is a very good evaluation of the spectral response, but has the drawback of requiring the use of a device, in particular the monochromator, which is generally expensive.

Another method belonging to the state of the known art consists in estimating the spectral response using a circular narrow bandpass filter whose central wavelength is adjustable in function of a rotation angle. This method as well allows obtaining an estimate that is a good approximation of the spectral response and even this method has the drawback of requiring the use of a device, in particular the circular filter, which is generally expensive.

A general purpose of the present disclosure is to provide a method for estimating the spectral response of an infrared photodetector that does not present the drawbacks described above with reference to the known art.

This and other purposes are achieved through a method for estimating the spectral response of an infrared photodetector as defined in claim 1 in its most general form, and in the dependent claims in several particular embodiments.

The invention will be better understood from the following detailed description of its embodiments, provided by way of example and therefore in no way limiting, in relation to the accompanying drawings, wherein:

- Figure 1 is a schematic flow diagram of an embodiment of a method for estimating the spectral response of an infrared photodetector;
- Figure 2 shows a chart that represents the typical trend of the spectral response curve of an infrared photodetector; and
- Figure 3 shows the block diagram of a possible embodiment of a data acquisition and processing system adapted to estimate the spectral response of a photodetector according to the method of Figure 1.

In the annexed figures, equal or similar elements will be indicated by the same reference numbers.

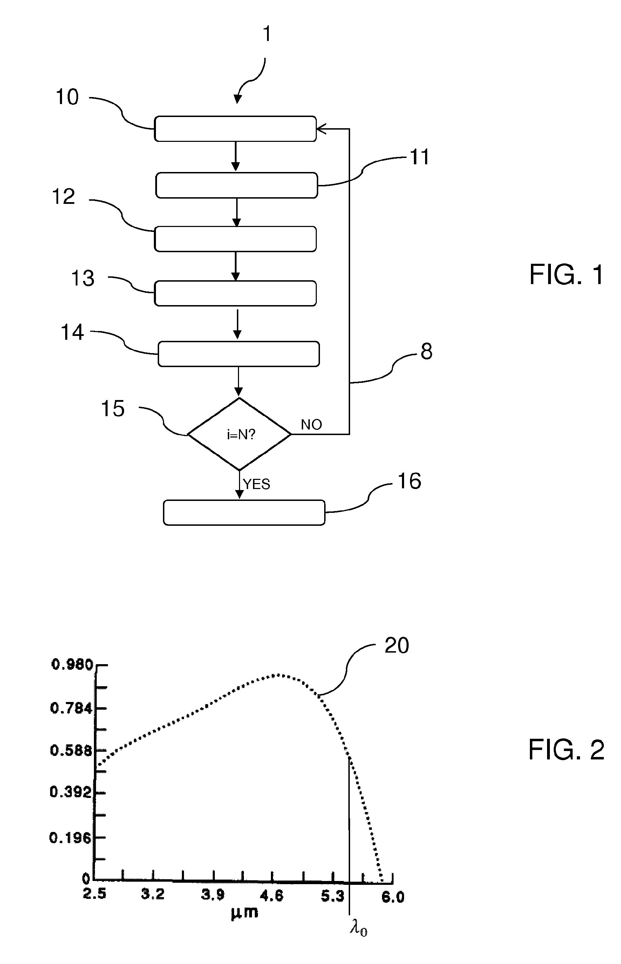

Figure 1 is a schematic flow diagram of an embodiment of a method 1 for estimating the spectral response of an infrared photodetector, hereinafter also called estimation method 1 or characterization method 1.

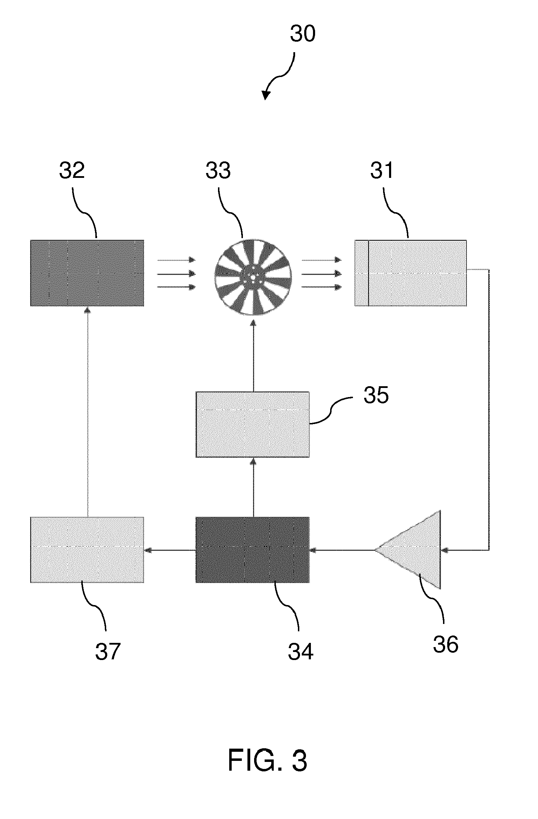

According to a possible, and not limiting, preferred embodiment, the above estimation method 1 is carried out through a data acquisition and processing system 30 conforming to the block diagram of Figure 3, more preferably in an automated way.

Before starting the description of the estimation method 1 of Figure 1, it is considered appropriate to provide several notes regarding the mathematical model underlying the estimation method 1.

An infrared photodetector 31, schematically represented in Figure 3, is a semiconductor device with energy gap $E_g$. Only photons with an energy $E \geq E_g$ can produce an electron-hole pair. In function of the absorption coefficient and quantum efficiency $n(\lambda)$ the function that represents the spectral response of the photodetector is generally complex. However, since the peak response of a photodetector depends on the spectral response, it is important to know the trend of the spectral response with respect to the frequency (or better, with respect to the wavelength). A typical spectral response function 20 of an infrared photodetector is shown in figure 2.

Assume to have a well calibrated black body 32, shown schematically in Figure 3, at a temperature T with a radius of the circular opening $r$ at a distance L from the infrared photodetector 31. The power received by the infrared photodetector 31 is equal in this case to:

$$P_0 = \frac{\sigma T^4}{\pi} \frac{\pi r^2}{L^2} A_0 \tau$$

$$(1)$$

wherein:

σ is the Stefan-Boltzmann constant,
$A_0$ the active area of the photodetector 31,
τ the atmospheric transmittance.

The infrared photodetector 31 sees only the optical radiation emitted by the black body 32 whose wavelength is shorter than the cut-off wavelength $\lambda_0$ wherein:

$$\lambda_0 = \frac{hc}{E}g \tag{2}$$

Wherein **h** is Planck's constant and **c** is the speed of light.
The effective power seen by the infrared photodetector 31 will, therefore, be:

$$P = P_0 g \tag{3}$$

being

$$g = \frac{1}{\sigma T^4} \int_0^{\lambda_0} W_{\lambda,T} S(\lambda) d\lambda \tag{4}$$

wherein $W_{\lambda,T}$ represents Planck's law and is defined by:

$$W_{\lambda,T} = \frac{c_1}{\lambda^5(e^{\frac{c_2}{\lambda T}} - 1)} \tag{5}$$

and wherein **S(λ)** is the spectral response 20 of the infrared photodetector 31, schematically represented in Figure 2.
The electrical signal output from the photodetector 31 can be written as:

$$V = R_\lambda P R \tag{6}$$

wherein $R_\lambda$ is the peak responsivity and R the resistance of the load, assuming that the infrared photodetector 31 is operating in PV mode. In the following, without thereby introducing any limitation, the resistance value R will be set equal to 1.
The electrical signal output from the photodetector 31 can be written as:

$$V = R_\lambda \frac{r}{L^2}^2 A_0 \int_0^{\lambda_0} W_{\lambda,T} S(\lambda) d\lambda \tag{7}$$

wherein the value of τ was set equal to 1 because the distance L in an experimental or industrial set-up is relatively low and for this reason the effect of the atmospheric transmittance can be ignored.
Defining B as indicated below:

$$B = R_\lambda \frac{r^2}{L^2} A_0$$

$$(8)$$

The output signal V can be written as:

$$V = B \int_0^{\lambda_0} W_{\lambda,T} S(\lambda) d\lambda .$$

$$(9)$$

Clearly the output signal V depends on the temperature T of the black body 32 for which the equation (9) can be written as:

$$V(T) = B \int_0^{\lambda_0} W_{\lambda,T} S(\lambda) d\lambda .$$

$$(10)$$

The equation 10 is a Fredholm integral equation of the first kind wherein $S(\lambda)$ represents the unknown function, while $V(T)$ represents the known function and $W_{\lambda,T}$ represents the kernel of the equation. The solution of this type of integral equation is a task that is generally quite difficult. In many cases the integral equation is the result of an ill-posed problem and the solution cannot be found. In this case, it can be said that the problem can be solved because it is certain that the spectral response $S(\lambda)$ exists. Since the kernel of this integral equation is asymmetrical, the Applicant has decided not to solve analytically but numerically. Because it is certain that the function $S(\lambda)$ is a continuous function over a range of wavelengths $[0, \lambda_0 + \delta]$, it is possible to expand the spectral response $S(\lambda)$ in a power series as shown below:

$$S(\lambda) = \sum_{k=0}^{N} a_k \lambda^k .$$

$$(11)$$

It is clear that the above mentioned power series is a function of the wavelength. From the equation (11), one therefore understands that, by calculating the coefficients $a_k$, it is possible to estimate the spectral response $S(\lambda)$ of the photodetector 31.

Fredholm integral equations of the first kind usually have the form:

$$f(x) = \int_a^b K(x,t) g(t) dt .$$

$$(12)$$

In the above integral equation (12), $K(x,t)$ is the kernel of the equation, $f(x)$ the known function and $g(t)$ the unknown function. In our case we have:

$$K(\lambda,T) = \frac{c_1}{\lambda^5 (e^{\frac{c_2}{\lambda T}} - 1)}$$

$$(13)$$

and $g(t) = S(\lambda), f(x) = V(T).$

We can, therefore, write:

$$F(T) = \sum_{k=0}^{N} a_k \int_{0}^{\lambda_0} K(\lambda,T)\lambda^k d\lambda \tag{14}$$

wherein:

$$F(T) = \frac{1}{B}V(T). \tag{15}$$

We must, therefore, resolve the equation $F(T)$ and setting

$$f(T) = \frac{1}{C_1}F(T)$$

we have:

$$\sum_{k=0}^{N} a_k h_k(T) = f(T) \tag{16}$$

wherein

$$h_k(T) = \int_{0}^{\lambda_0} K(\lambda,T)\lambda^k d\lambda. \tag{17}$$

From the above, and in particular, from the equation (16), one can see that it was possible to transform an analytical problem into a numerical problem. In fact, it is possible to write the equation (16) H(T)a=f(T) wherein the matrix H is a matrix of coefficients $h_k(T)$ for different temperatures $T_1, \dots, T_N$ of the black body and it can be written in the form:

$$H = \begin{bmatrix} h_0(T_1) & \dots & h_N(T_1) \\ \dots & \dots & \dots \\ h_0(T_N) & \dots & h_N(T_N) \end{bmatrix} \tag{18}$$

and wherein:

$$a = \begin{pmatrix} a_1 \\ \dots \\ a_N \end{pmatrix} \text{ and } f(T) = \begin{pmatrix} f(T_1) \\ \dots \\ f(T_N) \end{pmatrix}. \tag{19}$$

For the above reasons the vector of coefficients a, which represents the unknown, can be obtained by inverting the matrix **H**. To perform this inversion, one must have the certainty that the determinant of the matrix H is different from 0. This condition is satisfied and, in fact, each row of the matrix H cannot be a linear combination of another row, each column of the matrix H cannot be a linear combination of another column and it is impossible that a row or a column has all the elements equal to 0. The fact that each row of the matrix H cannot be a linear combination of another row and each column of the matrix H cannot be a linear combination of another column derives from the fact that the integral

$$\int\limits_{0}^{\lambda_0} W(\lambda,T)\lambda^k d\lambda \text{ is a nonlinear function of the wavelength } \lambda \text{ and temperature } \textbf{\textit{T}}.$$

The calculation of the integrals

$$K(\lambda,T) = \int\limits_{0}^{\lambda_0} W(\lambda,T)\lambda^k d\lambda$$

for different values of k and T with T = $T_1$, ... , $T_N$ for the calculation of the coefficient matrix H is only possible if you exactly know the cut-off wavelength $\lambda_0$. Since this does not always happen, it can be assumed to calculate the integrals between 0 and $\lambda_0 + \delta$ wherein $\delta$ represents a small amount is added to $\lambda_0$. For example, for indium antimonide (InSb) photodetectors operating at a temperature of 77K, the cut-off wavelength $\lambda_0$ is known with a very good approximation. In mercury telluride cadmium ($Hg_{1-x}CD_xTe$) photodetectors, the molar ratio x may not be known with accuracy and, moreover, the cut-off wavelength $\lambda_0$ could depend on the operating temperature. For this reason it is possible to expand the spectral response function in a power series taking into account that for longer wavelengths of the cut-off wavelength $\lambda_0$ this function is zero. This consideration allows setting the limits of integration between 0 and $\lambda_0 + \delta$. For example, if one is aware of the fact that the cut-off wavelength $\lambda_0$ is located in the first infrared optical window, this is approximately equal to 5 microns, so one can decide to set $\delta$ so that this is equal to one micron or 0.7 micron, for which the integral becomes:

$$K(\lambda,T) = \int\limits_{0}^{5,7\mu} W(\lambda,T)\lambda^k d\lambda \qquad (20)$$

The same considerations above are valid for photodetectors operating in the infrared window $8\mu$-$14\mu$.

Therefore, from the above, it is clear that the spectral response of an infrared photodetector can be estimated numerically by calculating the elements of the matrix H as the index k and the temperature changes by calculating each of the elements according to the following formula:

$$h_k(T_j) = \int\limits_{0}^{\lambda_0 + \delta} W(\lambda,T_j)\lambda^k d\lambda. \qquad (21)$$

Figure 3 shows a data acquisition and processing system 30 suitable and configured to estimate the spectral response of a photodetector 31. The system comprises a black body 32 whose operating temperature can be controlled, a temperature controller 37 operatively connected to the black body 32, a chopper 33 operatively interposed between the black body 32 and the photodetector 21, a speed controller 35 of the chopper, a data acquisition and processing block 34 operatively connected to the speed controller 35 and temperature controller 37, and operatively connected to the infrared photodetector 31 for receiving an electrical input signal produced in output from the photodetector 31. It is possible to provide that the data acquisition and processing system 30 comprises an amplifier block 36 operatively interposed between the photodetector 31 and the data acquisition and processing block 34. Although in Figure 3, the temperature control of the black body 32 is carried out automatically via the blocks 34 and 37, in an alternative embodiment this control may not be of the automated type and may, for example, be a control achieved through manual adjustments. The chopper 33 is such as to produce a pulsed electromagnetic radiation starting from the continuous electromagnetic radiation at optical frequencies emitted by the black body 32. Since the chopper 33 is such as to transform the continuous electromagnetic radiation at optical frequencies into a trapezoidal signal, the electrical power measured can be developed in a Fourier series as follows:

$$P_1(t) = c_0 + \sum_{k=1}^{\infty} 2|c_n|\cos\left(n\omega_0\tau + \phi_n\right)$$

$$(21)$$

In which the harmonic components of the power are given by:

$$2|c_n| = \frac{2A\tau}{T}\left|\frac{\sin\left(n\pi\tau/T_p\right)}{n\pi\tau/T_p}\right|\left|\frac{\sin\left(n\pi\tau_r/T_p\right)}{n\pi\tau_r/T_p}\right|$$

$$(22)$$

Wherein $T_p$ is the period of the waveform, $\tau$ is the pulse duration and $\tau_r$ is the pulse rise time.

Tables 1-3 show the elements of the matrix H for different values of k (0 to 2), as the temperature T varies, for the two wavelengths windows of interest for the infrared.

Table 1

| BB temperature | k | 0-5.7 | 0-14.7 |
|---|---|---|---|
| 400 | 0 | 168.67 | 1056.46 |
| 450 | 0 | 408.22 | 1824.4 |
| 500 | 0 | 848.36 | 2932.48 |
| 550 | 0 | 1576.45 | 4462.73 |
| 600 | 0 | 2691.42 | 6505.37 |
| 650 | 0 | 4302.09 | 9158.94 |

Table 2

| BB temperature | k | 0-5.7 | 0-14.7 |
|---|---|---|---|
| 400 | 1 | $7.9 \times 10^{-4}$ | $9.25 \times 10^{-2}$ |
| 450 | 1 | $1.87 \times 10^{-3}$ | $1.5 \times 10^{-2}$ |
| 500 | 1 | $3.8 \times 10^{-3}$ | $2.27 \times 10^{-2}$ |
| 550 | 1 | $6.87 \times 10^{-3}$ | $3.25 \times 10^{-2}$ |
| 600 | 1 | $1.14 \times 10^{-2}$ | $4.48 \times 10^{-2}$ |
| 650 | 1 | $1.771 \times 10^{-2}$ | $5.99 \times 10^{-2}$ |

Table 3

| BB temperature | k | 0-5.7 | 0-14.7 |
|---|---|---|---|
| 400 | 2 | $3.84 \times 10^{-9}$ | $8.97 \times 10^{-8}$ |
| 450 | 2 | $8.88 \times 10^{-9}$ | $1.39 \times 10^{-7}$ |
| 500 | 2 | $1.76 \times 10^{-8}$ | $2.01 \times 10^{-7}$ |
| 550 | 2 | $3.12 \times 10^{-8}$ | $2.76 \times 10^{-7}$ |
| 600 | 2 | $5.08 \times 10^{-8}$ | $3.65 \times 10^{-7}$ |
| 650 | 2 | $7.75 \times 10^{-8}$ | $4.68 \times 10^{-7}$ |

As one can see, the values of the elements $h_k(T_j)$ decline rapidly by increasing k. For this reason, it is convenient to estimate the spectral response as a power series using polynomials of not very high degree to avoid having to deal with very small numbers. For example, for k = 5, the value of the coefficient $h_k(400)$ is equal to $4.79 \times 10^{-25}$.

With reference to Figures 1 and 3, we will now describe an embodiment of the estimation method 1, using a data acquisition and processing system as shown, for example, in Figure 3, through which it is possible to numerically calculate an estimate of the spectral response of an infrared photodetector 31.

In its most general sense, the method 1 comprises the steps of:

a) controlling 10 the temperature of a black body 32 so that this assumes a temperature value $T_1$;

b) emitting 11 a continuous electromagnetic radiation at optical frequencies by means of the black body 32 while keeping the black body at said assumed temperature value $T_1$ ;

c) producing 12 a pulsed electromagnetic radiation starting from the continuous electromagnetic radiation at optical frequencies;

d) receiving 13 the pulsed electromagnetic radiation by means of the infrared photodetector 31 to produce an output electrical signal;

e) obtaining and storing 14 a digital value V ($T_1$), associated with said given temperature value $T_1$, correlated to the amplitude of said output electrical signal;

f) repeating 15, as indicated by the arrow 8 in Figure 1, the steps a) to e) overall for a plurality of N different temperature values $T_8,...,T_N$, where N is an integer greater than 1, and obtaining overall a vector of digital values V= [V ($T_1$), ..., V ($T_N$) ] each associated with a respective temperature value;

g) making an estimate 16 of said spectral response 20 expanding said spectral response S ($\lambda$) 20 in a power series, and calculating a vector of N coefficients A=[$a_1$, ..., $A_N$] of the above power series by solving a matrix equation in which said vector of the coefficients A = [$a_1$, ..., $A_N$] is calculated as the product of a matrix $H^I$ of size N x N for said vector of digital values V=[V ($T_1$), ..., V ($T_N$)] .

It is to be notice that the above mentioned power series is a function of the wavelength and that in a practical implementation of the method the abovementioned power series has a limited number of elements and is therefore a polynomial function. For this reason, for the purposes of explaining the method of the present disclosure, the power series and polynomial function have the same meaning.

As indicated by block 15 in Figure 1, the macro-step of acquisition represented the set of steps 10-14, ends when one has obtained the element of the vector V corresponding to the last of the N temperature values set for the black body 32, i.e., one passes from the step of making the estimate 16 when the index i becomes equal to N.

Preferably, the above-mentioned matrix $H^I$ represents the solving kernel of a numerical problem corresponding to the solution of a Fredholm integral equation of the first kind having said spectral response as the unknown.

The matrix $H^I$ is none other than the inverse matrix H in the formula (18). For this reason, according to a possible embodiment, the step of making the estimate 16 comprises an operation of calculating the matrix $H^I$ by inverting the matrix H. In this embodiment, the step of making the estimate 16 comprises an operation of calculating said matrix H wherein

$$H = \begin{bmatrix} h_0(T_1) & ... & h_N(T_1) \\ ... & ... & ... \\ h_0(T_N) & ... & h_N(T_N) \end{bmatrix}$$

and wherein each of the elements $h_x(T_y)$ of matrix $H$ is obtained by calculating an integral according to the following formula:

$$h_k(T_y) = \int_0^{\lambda_0} K(\lambda, T_y) \lambda^k$$

wherein $\lambda_0$ is a wavelength greater than or equal to the cut-off wavelength of said spectral response and wherein $K(\lambda, T_y)$ is the function of Planck's law that regulates the emission of the black body 32 at the temperature $T_y$.

According to an embodiment, the number N is in the range 4-8, extremes included and is, for example, equal to 6.

Preferably, and as already explained with reference to formula (11), in the step of making the estimate 16, the above-mentioned spectral response is expanded into a power series in accordance with the following formula:

$$S(\lambda) = \sum_{k=0}^{N} a_k \lambda^k.$$

Preferably, the electrical signal output by the infrared photodetector 31 is a voltage signal and the said digital value is representative of the peak amplitude of said voltage. More preferably, the step of obtaining and storing 14 comprises the steps of sampling said electrical signal to obtain a plurality of signal samples and performing a Fourier transform of said signal samples to obtain a plurality of frequency lines each with its own amplitude value, and wherein in the step of obtaining and storing 14, said digital value is obtained as the amplitude value of the line at the lowest frequency.

As shown in the diagram of Figure 3, preferably the step of producing 12 the pulsed electromagnetic radiation is carried out using a chopper 33 interposed between the black body 32 and the infrared photodetector 31.

Note that the above description also corresponds to the description of a data acquisition and processing system 30 configured for estimating the spectral response $S(\lambda)$ of an infrared photodetector 31 by performing a method 1, described above, wherein the data acquisition and processing system 30 comprises said black body 32 and a data acquisition and processing block 34, wherein said data acquisition and processing block is configured and programmed to perform at least said step of obtaining the estimate 16. According to a preferred embodiment, said data acquisition and processing block is operatively connected to the black body 32 and to the photodetector 31 and is configured and programmed to perform said controlling step 10 to set the temperature of the black body 32 and to carry out in an automated manner said steps 10 to 14.

Based on the above description it is, therefore, possible to understand how a method 1 for estimating the spectral response of an infrared photodetector of the type described above allows achieving the purposes mentioned above with reference to the state of the prior art. In fact, starting from response measurements of the infrared photodetector 31 obtained by varying the temperature of the black body, the method 1 is such as to obtain an estimate of the spectral response by solving a numerical matrix problem. The above method 1, fully automatable and presents a cost reduction compared to the known methods because it does not require the use of a monochromator or a circular filter.

Without prejudice to the principle of the invention, the forms of embodiment and details of construction may be varied widely with respect to what has been described and illustrated purely by way of nonlimiting example, without thereby departing from the invention as defined in the appended claims.

**Claims**

1. Method (1) for estimating the spectral response $S(\lambda)$ (20) of an infrared photodetector (31) comprising the steps of:

   a) controlling (10) the temperature of a black body (32) so that this assumes a temperature value $T_1$;
   b) emitting (11) a continuous electromagnetic radiation at optical frequencies by means of the black body (32) while keeping the black body at said assumed temperature value $T_1$ ;
   c) producing (12) a pulsed electromagnetic radiation starting from the continuous electromagnetic radiation at optical frequencies;
   d) receiving (13) the pulsed electromagnetic radiation by means of the infrared photodetector (31) to produce an output electrical signal;
   e) obtaining and storing (14) a digital value V ($T_1$), associated with said given temperature value $T_1$, correlated to the amplitude of said output electrical signal;
   f) repeating (15) steps a) to e) for a plurality of N different temperature values $T_2,...,T_N$, where N is an integer greater than 1, and obtain overall a vector of digital values V = [V ($T_1$) , ..., V ($T_N$) ] each associated with a respective temperature value;
   g) making an estimate (16) of said spectral response (20) expanding said spectral response $S(\lambda)$ (20) in a power series and calculating a vector of N coefficients A = [$a_1,...,a_N$] of said power series by solving a matrix equation in which said vector of coefficients A = [$a_1, ...,a_N$] is calculated as the product of a matrix $H^I$ of size N x N for said vector of digital values V = [V ($T_1$), ..., V($T_N$) ] .

2. Method (1) for estimating the spectral response according to claim 1, wherein N is in the range from 4-8 inclusive.

3. Method (1) for estimating the spectral response according to claim 2, wherein N is equal to 6.

4. Method (1) for estimating the spectral response according to any of the previous claims, wherein said power series is equal to:

$$S(\lambda) = \sum_{k=0}^{N} a_k \lambda^k$$.

5. Method (1) for estimating the spectral response according to any of the previous claims, wherein said step of making an estimate g) comprises an operation of calculating said matrix $H^I$ inverting a further matrix H.

6. Method (1) for estimating the spectral response according to claim 5, wherein the step of making an estimate g) comprises an operation for calculating said further matrix H in which

$$H = \begin{bmatrix} h_0(T_1) & ... & h_N(T_1) \\ ... & ... & ... \\ h_0(T_N) & ... & h_N(T_N) \end{bmatrix}$$

and wherein each of the elements $h_k(T_y)$ of said further matrix $H$ is obtained by calculating an integral according to the following formula:

$$h_k(T_y) = \int_0^{\lambda_0} K(\lambda, T_y)\lambda^k$$

wherein $\lambda_0$ is a wavelength greater than or equal to the cut-off wavelength of said spectral response and wherein $K(\lambda, T_y)$ is the function of Planck's law which regulates the emission of the black body (32).

7. Method (1) for estimating the spectral response according to any of the previous claims, wherein the electrical signal is a voltage signal and wherein said digital value is representative of the peak amplitude of said voltage.

8. Method (1) for estimating the spectral response according to claim 7, wherein said step of obtaining e) comprises the steps of sampling said electrical signal to obtain a plurality of signal samples and performing a Fourier transform of said signal samples to obtain a plurality frequency lines each with its own amplitude value, and wherein in said step of obtaining, said digital value is obtained as the amplitude value of the line at the lowest frequency.

9. Method (1) for estimating the spectral response according to any of the previous claims, wherein said matrix $H^I$ is the solving kernel of a numerical problem corresponding to the solution of a Fredholm integral equation of the first kind having said spectral response as the unknown.

10. Method (1) for estimating the spectral response according to any of the previous claims, wherein said step of producing a pulsed electromagnetic radiation is carried out using a chopper (33) interposed between said black body (32) and said photodetector (31).

11. Data acquisition and processing system (30) configured for estimating the spectral response $S(\lambda)$ of an infrared photodetector by performing a method (1) according to any of the previous claims, wherein said system (30) comprises said black body and a data acquisition and processing block (34), wherein said data acquisition and processing block is configured and programmed to perform at least said step g).

12. Data acquisition and processing system (30) according to claim 11, configured to estimate the spectral response $S(\lambda)$ of an infrared photodetector wherein said data acquisition and processing block (34) is operatively connected to said black body (32) and to said photodetector (31) and is configured and programmed to perform said step of controlling a) to set the temperature of the black body (31) and to carry out in an automated manner said steps a) to e).

FIG. 1

FIG. 2

30

32        33        31

35

37        34        36

FIG. 3

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | DE 197 19 210 A1 (DEUTSCH ZENTR LUFT & RAUMFAHRT [DE])<br>12 November 1998 (1998-11-12)<br>* page 2, lines 2-21 *<br>* page 2, line 50 - page 3, line 12 *<br>----- | 1-5,7-12<br><br>6 | INV.<br>G01J5/62<br>G01J3/28 |
| A | WO 98/41826 A1 (UNIV CALIFORNIA [US])<br>24 September 1998 (1998-09-24)<br>* page 3, line 30 - page 5, line 15; figure 1 *<br>----- | 1-12 | |
| A | DE 197 19 211 A1 (DEUTSCH ZENTR LUFT & RAUMFAHRT [DE])<br>12 November 1998 (1998-11-12)<br>* page 1, lines 6-22; claims 1,4 *<br>----- | 1-5,7-12 | |
| A | LINDERMEIR E ET AL: "CALIBRATION OF A FOURIER TRANSFORM SPECTROMETER USING THREE BLACKBODY SOURCES",<br>APPLIED OPTICS, OPTICAL SOCIETY OF AMERICA, WASHINGTON, DC; US,<br>vol. 31, no. 22,<br>1 August 1992 (1992-08-01), pages 4527-4533, XP000292099,<br>ISSN: 0003-6935, DOI: 10.1364/AO.31.004527<br>* the whole document *<br>----- | 1-12 | TECHNICAL FIELDS SEARCHED (IPC)<br><br>G01J |

The present search report has been drawn up for all claims

| Place of search | Date of completion of the search | Examiner |
|---|---|---|
| Munich | 15 October 2015 | Hambach, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 15 16 4674

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2015

| Patent document cited in search report | | Publication date | Patent family member(s) | | Publication date |
|---|---|---|---|---|---|
| DE 19719210 | A1 | 12-11-1998 | DE | 19719210 A1 | 12-11-1998 |
| | | | FR | 2763126 A1 | 13-11-1998 |
| | | | GB | 2326472 A | 23-12-1998 |
| WO 9841826 | A1 | 24-09-1998 | AU | 6648398 A | 12-10-1998 |
| | | | US | 6012840 A | 11-01-2000 |
| | | | WO | 9841826 A1 | 24-09-1998 |
| DE 19719211 | A1 | 12-11-1998 | DE | 19719211 A1 | 12-11-1998 |
| | | | FR | 2763125 A1 | 13-11-1998 |
| | | | GB | 2326231 A | 16-12-1998 |

EPO FORM P0459

For more details about this annex : see Official Journal of the European Patent Office, No. 12/82